# EUROPEAN PATENT APPLICATION

(11) **EP 3 885 857 A1**
(43) Date of publication of application: **29.09.2021**
(21) Application number: 20165607.1
(22) Date of filing: 25.03.2020
(51) Int. Cl.: G05B 19/05

(54) **A METHOD OF CONVERTING A LOGIC DIAGRAM IN A TEXTUAL FORMAT**

(71) Applicant: Siemens Aktiengesellschaft, 80333 München (DE)
(72) Inventor: Lange, Ronald, 90766 Fürth (DE); Liu, Kai, 90562 Heroldsberg (DE); Muenzel, Georg, Yardley, PA 19067 (US)

(57) **Abstract**

The current disclosure describes a method of converting a logic diagram in a textual format using an engineering tool associated with a control system of an industrial facility. The method comprises detecting one or more rungs in the logic diagram; creating a textual element for the logic diagram, the textual element further comprises one or more text sub-elements, each text sub-element associated with a corresponding rung from the one or more rungs; and populating each text sub-element associated with a corresponding rung. Populating each text sub-element comprises detecting one or more branches on the corresponding rung and sequence of graphical elements on each branch from the one or more branches; and generating a sequence of text tokens based on the detected sequences of graphical elements and the one or more branches.

## Description

### Background

The current invention relates to industrial automation and more specifically, generation of control logic used for configuring controllers in the industrial environment. Usually, control logic is defined in accordance to international standard IEC 61131 for programmable logic controllers.

According to IEC 61131-3, there are five programming languages specified for automation engineering. From the five languages, three of the languages (ladder diagram, function block diagram and sequential functional chart) are graphical. Accordingly, various tools have been developed to enable users to write programs in these graphical languages.

### Description

The current invention relates to conversion of graphical control logic diagrams to text artifacts. As previously mentioned, conventionally, control logic is developed using a graphical programming language such as ladder diagram (LD), function block diagram (FBD) or sequential functional chart (SFC). Subsequent to generation of control logic diagrams, the control logic diagrams are converted into a binary format. Then in the binary format, the control logic diagrams are stored in the engineering database and are used by a plurality of other engineering and configuration tools.

However, the conversion and utilization of control logic diagrams in binary format is not optimal and accordingly, to address increasing software relevance, complexity and variability, and to cover use cases like version control for automation projects, a source/line-based persistence of control logic diagrams is required. There have been different attempts to persist the control logic diagrams in text format. One such approach is illustrated in IEC 61131-10, a new working group created to enable the data exchange of the programming languages defined in IEC61131-3.

IEC 61131-10 defines an extensible markup language (XML) based data format in which parts of the control logic diagrams are listed one by one as XML nodes. In each part, description and properties of the part are defined as attributes or sub-elements of the XML node. The connection between two parts is embedded in the properties of the output part, which refers to the ID of the input part. Apart from that, the resulting XML file contains layout information of the individual parts and connections. However, this results in a verbose XML file and the human-readability of these files is severely limited. Several hundred of lines are required even for a simple control logic diagram with a couple of contacts and accordingly, is sub optimal. Therefore, there is a need for a method and device to address the issues mentioned above.

Accordingly, the current disclosure describes a method accordingly to claim 1, an engineering tool according to claim 7 and a non-transitory storage medium according to claim 10 which addresses the above-mentioned aspects.

In one aspect the current disclosure describes a method of persisting a logic diagram in an engineering tool associated with a control system of an industrial facility. The method comprises detecting one or more rungs in the logic diagram; creating a textual element for the logic diagram, the textual element comprising one or more text sub-elements, each text sub-element associated with a corresponding rung from the one or more rungs; and populating each text sub-element associated with a corresponding rung.

Each rung is indicated as a horizontal line in the logic diagram in a first orientation. Populating each text sub-element associated with a corresponding rung comprises detecting one or more branches on the corresponding rung; detecting a sequence of graphical elements on each branch from the one or more branches; and generating a sequence of text tokens based on the detected sequences of graphical elements and the one or more branches, wherein the sequence of text tokens comprises one or more fork tokens corresponding to the one or more branches and a plurality of tokens associated with the sequences of graphical elements. Each fork token associated with a corresponding branch is indicative of a start of the corresponding branch, wherein one or more tokens associated with the sequence of graphical elements of the corresponding branch are placed after the first fork token of the corresponding branch.

Accordingly, the current disclosure discloses a method of converting and persisting of control logic diagrams and other graphical control artifacts into textual format. Additionally, by preserving the sequence of graphical elements as in the control logic diagram while generating the sequence of text tokens, the resulting text file is substantially smaller and less cumbersome. Additionally, since the position of the text token in the sequence of text tokens acts as its identifier, no token identifiers are required for text tokens and this reduces complexity of the textual format.

In an example, detecting the one or more branches comprises detecting a join associated with a corresponding branch and the second fork token associated with the corresponding branch is indicative of the detected join of the corresponding branch.

In an example, detecting a sequence of graphical elements comprises detecting at least one logic block on a first branch, the at least one logic block comprising one or more input pins, wherein a first input pin from the one or more input pins, is connected to the corresponding first branch and wherein a second input pin from the one or more input pins is connected to at least one input from one of a second branch or a second rung.

In a preferred example, generating the sequence of text tokens further comprises generating a block call element based on the detected at least one logic block on the first branch, the block call element comprising a input token indicative of the second input pin; wherein the block call element is placed between the first fork token of the corresponding first branch and the second fork token of the corresponding first branch. Since, the first pin is not enumerated in text form, the number of lines to save the logic diagram is further reduced.

In another aspect, the current disclosure discloses an engineering tool for generating control logic for a controller in a control system. The engineering tool comprises a user interface for receiving user input, and a persistence module connected to the user interface. The user interface is configured to generate a logic diagram based on the user input. The persistence module is configured to detect one or more rungs in the logic diagram, wherein each rung is indicated as a horizontal line in a first orientation; create a textual element for the logic diagram, wherein the textual element further comprises one or more text sub-elements, each text sub-element associated with a corresponding rung from the one or more rungs; and populate each text sub-element associated with a corresponding rung. Populating each text sub-element comprises detecting one or more branches on the corresponding rung; detecting a sequence of graphical elements on each branch from the one or more branches; and generating a sequence of text tokens based on the detected sequences of graphical elements and the one or more branches, wherein the sequence of text tokens comprises one or more fork tokens corresponding to the one or more branches and a plurality of tokens associated with the sequences of graphical elements. Each fork token associated with a corresponding branch is indicative of a start of the corresponding branch, wherein one or more tokens associated with the sequence of graphical elements of the corresponding branch are placed after the first fork token of the corresponding branch.

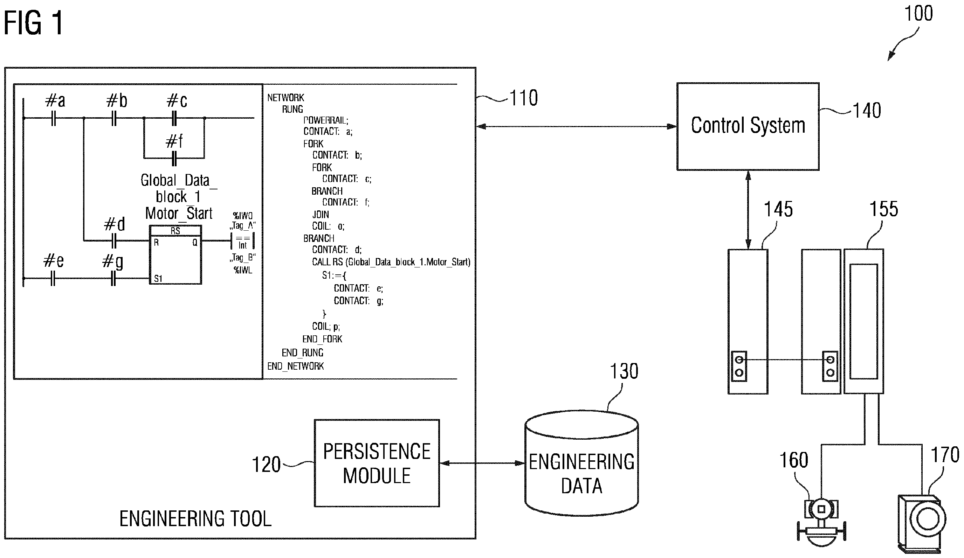

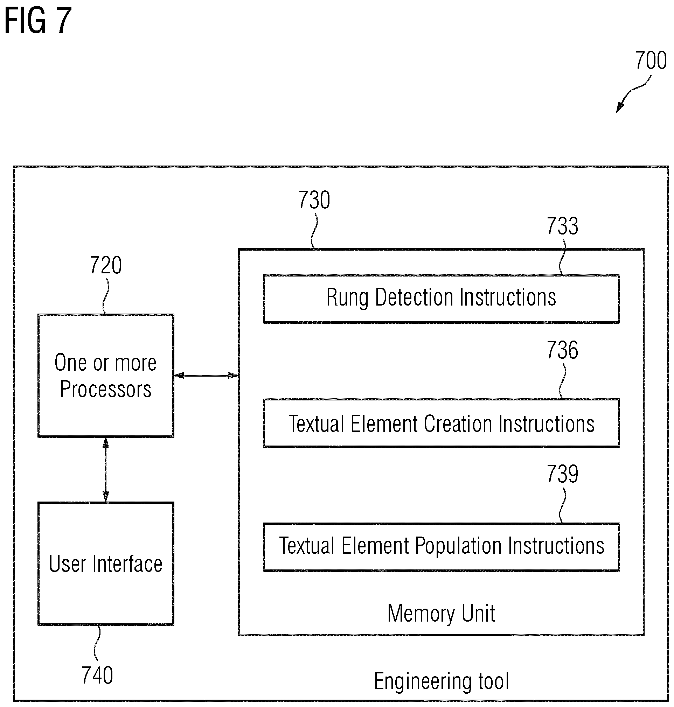

In yet another aspect, the current disclosure describes a non-transitory storage medium for persisting a logic diagram. The non-transitory storage medium comprises a plurality of instructions, wherein execution of the plurality of instructions by one or more processors, causes the one or more processors to detect one or more rungs in the logic diagram, wherein each rung is indicated as a horizontal line in the logic diagram in a first orientation; create a textual element for the logic diagram, wherein the textual element further comprises one or more text sub-elements, each text sub-element associated with a corresponding rung from the one or more rungs; and populate each text sub-element associated with a corresponding rung. Populating each text sub-element comprises detecting one or more branches on the corresponding rung; detecting a sequence of graphical elements on each branch from the one or more branches; and generating a sequence of text tokens based on the detected sequences of graphical elements and the one or more branches, wherein the sequence of text tokens comprises one or more fork tokens corresponding to the one or more branches and a plurality of tokens associated with the sequences of graphical elements. Each fork token associated with a corresponding branch is indicative of a start of the corresponding branch, wherein one or more tokens associated with the sequence of graphical elements of the corresponding branch are placed after the first fork token of the corresponding branch. The advantages of the method and corresponding examples are also applicable to the engineering tool and the non-transitory storage medium. These aspects are further described in relation figures 1-7.

The following detailed description references the drawings, wherein:
Figure 1 illustrates an example section of an example industrial facility comprising an engineering tool;
Figure 2 illustrates an example method of persisting control logic diagram in a textual format;
Figure 3 illustrates an example ladder diagram generated by an engineering tool;
Figure 4 illustrates an example textual file created by the conversion of the example ladder diagram;
Figure 5 illustrates an example function block diagram generated by an engineering tool;
Figure 6 illustrates an example textual file created by the conversion of the example function block diagram; and
Figure 7 illustrates an example persistence module for persistence of logic diagram in a textual format.
Figure 1 illustrates an example section 100 in an industrial facility. Industrial facility herein refers to any environment where one or more industrial processes such as manufacturing, refining, smelting, assembly of equipment may take place and includes process plants, oil refineries, automobile factories, etc. The industrial facility may comprise a plurality of control devices connected to a plurality of field devices for monitoring and regulating one or more industrial processes in the industrial facility.

The section 100 comprises an engineering tool 110 for generating control logic for a plurality of controllers in a control system 140 in the industrial facility. An example controller 145 of the control system 140 is illustrated in figure 1. The controller 145 is connected to a couple of field devices 160 and 170 via an I/O module 155 for controlling a process or one or more process equipment in the industrial facility.

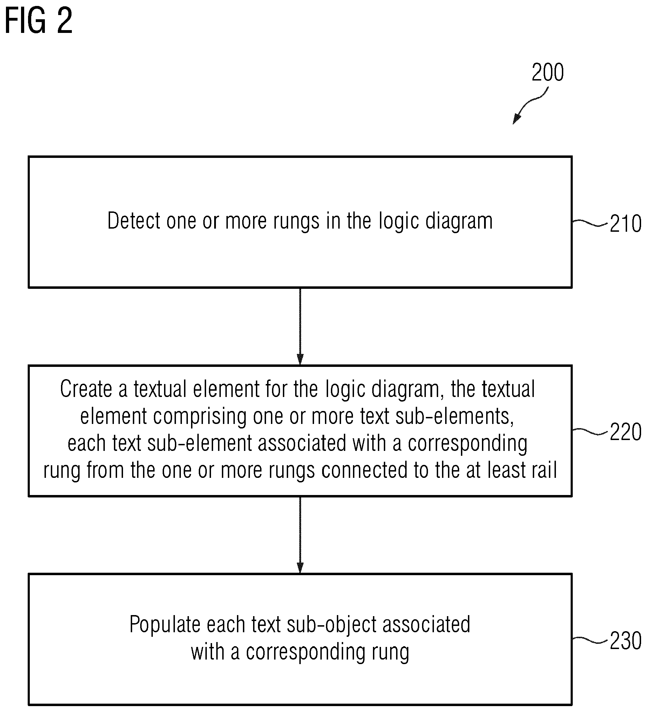

The engineering tool 110 comprises a user interface for receiving user input. The user interface is configured to generate a logic diagram based on the user input. Logic diagram herein refers to graphical artifacts indicative of control logic such as ladder diagram, functional block diagram, etc. Additionally, the engineering tool 110 includes a persistence module connected to the user interface wherein the persistence module is configured to convert the generated logic diagram into a text format and persist it in an engineering database 130. Additionally, in an embodiment, the engineering tool 110 is configured to retrieve existing logic diagrams from the engineering database 130 and display the same in both graphical and text format. The user can make changes to the logic diagrams using either the graphical representation or textual representation. The conversion of logic diagram into textual format is explained further in relation to figure 2.

Figure 2 illustrates a method 200 of persisting a logic diagram in an engineering database 130 associated with the control system 140 of an industrial facility 100. The method 200 is realized by the persistence module 120 of the engineering tool 110. The below steps are explained using the example ladder diagram 300.

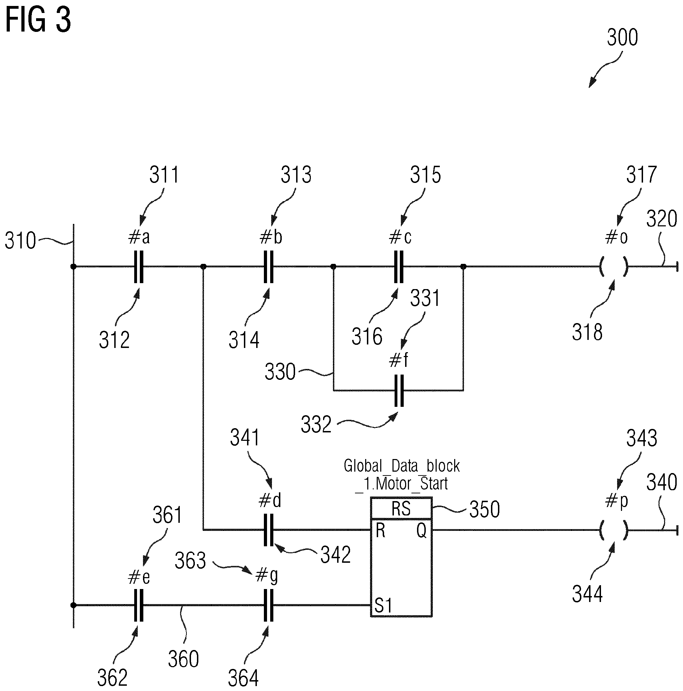

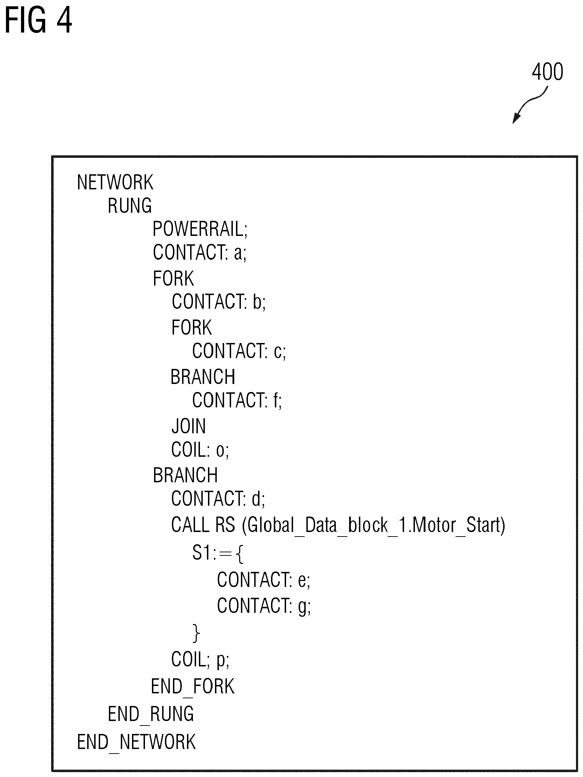

At step 210, the engineering tool 110 using the persistence module, detects one or more rungs in the logic diagram, wherein each rung is indicated as a horizontal line in the logic diagram in a first orientation. In an example, depending on the type of the control logic diagram, the engineering tool 100 detects the one or more rungs by detecting one or more rails. This is further explained in reference to figure 3 and figure 4.

Figure 3 illustrates an example ladder diagram 300. The ladder diagram 300 has a main rail or power rail 310, shown as a vertical line in the ladder diagram 300. Accordingly, the engineering tool 110 detects the power rail 310. Then the engineering tool 110 detects one or more rungs connected to the power rail 310. Each rung is shown in the figure as a horizontal line connected to the power rail. Accordingly, the engineering tool 110 detects rung 320 and rung 360.

Then, at step 220, the engineering tool 110 creates a textual element for the ladder diagram 300. The textual element further comprises one or more text sub-elements, each text sub-element associated with a corresponding rung from the one or more rungs (320, 360). For example, the textual element is a textual file which is equivalent of the logic diagram in text format. For each rung, in the ladder diagram 300, the engineering tool 110 creates a text sub-element associated with the corresponding rung. In the example, the text sub-element is indicated by a start text tag 'RUNG' and end text tag 'END_RUNG' (as shown in figure 4).

Then, at step 230, the engineering tool 110 populates each text sub-element associated with a corresponding rung. Populating each text sub-element comprises three sub steps. At the first sub step, the engineering tool 110 detects one or more branches on the corresponding rung. Each rung in the logic diagram comprises a main branch and one or more secondary branches. For the sake of simplicity, the main branch is numbered with the same number as the corresponding rung. For example, in relation to figure 300, the engineering tool 110 detects a main branch 320 and secondary branches 330 and 340 on the rung 320. Similarly, the engineering tool 110 detects a main branch 360 on the rung 360.

Then, at second sub step, the engineering tool 110 detects a sequence of graphical elements on each branch from the one or more branches of each rung. For example, in relation to figure 300, the engineering tool detects contacts 312, 314, 316 and coil 318 on the main branch 320 of the rung 320. Similarly, on branch 330, the engineering tool 110 detects contact 332. Then, on branch 340, the engineering tool 110 detects contact 342, logic block 350 and coil 344. Similarly, on the main branch of the rung 360, the engineering tool 110 detects contact 362, and contact 364.

Then, at third sub step, the engineering tool 110 generates a sequence of text tokens based on the detected sequences of graphical elements and the one or more branches. The sequence of text tokens comprises one or more fork tokens corresponding to the one or more branches and a plurality of tokens associated with the sequences of graphical elements. Each fork token associated with a corresponding branch is indicative of a start of the corresponding branch, wherein one or more tokens associated with the sequence of graphical elements of the corresponding branch are placed after the fork token of the corresponding branch.

For example, in relation to figure 3 and figure 4, starting with the main branch of the rung 320, the engineering tool 110 generates a text token 'CONTACT' with the input variable 'a' (311) for the contact 312. Then, since a secondary branch 340 forks from the main branch 320, the engineering tool 110 generates a first fork token and inserts the first fork token 'FORK'. Then, engineering tool 110 continues with the sequence of graphical elements on the main branch of the rung 320. After the first fork, the engineering tool 110 generates text token 'CONTACT' with the input variable 'b' (313) for the contact 314. Then, since a secondary branch 330 forks from the main branch 320, the engineering tool 110 generates a second fork token and inserts a second fork token 'FORK'. After the second fork, the engineering tool 110 generates text token 'CONTACT' with the input variable 'c' (315) for the contact 316. Then, since the branch 330 joins the main branch 320, the engineering tool 110 generates tokens associated with the branch 330. Accordingly, to indicate the branch 330, the engineering tool 110 generates token 'BRANCH'. Then, the engineering tool 110 generates tokens for the graphical elements on the branch 330. Accordingly, the engineering tool 110 generates text token 'CONTACT' with the input variable 'f' (331) for contact 332. Then since the branch 330 joins the main branch 320, the engineering tool 110 generates token 'JOIN' to indicate the joining of branch 330 with branch 320. Then, the engineering tool 110 generates text token 'COIL' with the output variable 'o' (317) for the coil 318.

Then, the engineering tool 110 generates text tokens for the sequence of graphical elements on the branch 340. To indicate the branch 340, the engineering tool 110 generates token 'BRANCH'. Then, the engineering tool 110 generates tokens for the graphical elements on the branch 340. Accordingly, the engineering tool 110 generates text token 'CONTACT' with the input variable 'd' (341) for contact 342. Then, the engineering tool 110 generates a block call element for the logic block 350. The block call element comprises a header section comprising the name of the block call element. In the example, the name of the block call element is RS and it has a parameter 'Global_Data_block_1.Motor_Start' which is a variable defined in a global data block. The global variable assignment is only an example to show the principle of the textual representation of the block. The input parameter can come from different sources and can all be represented in the described manner. While the logic block 350 comprises two pins R and S1, the block call element comprises the definition of S1. The definition of R is not mentioned in the block call element as the input value of R is derived from the previous text tokens in the text sub element. For the definition of S1, the engineering tool 110 generates tokens CONTACTs with the input variables 'e' (361) and 'g' (363) for contacts 362 and 364. Then, the engineering tool 110 generates text token 'COIL' with the output variable 'p' (343) for the coil 344.

For the rung 360, the engineering tool 110 does not generate any text tokens since the graphical elements of the rung 360 have already been referenced in the previous rung 320.

As described above, the ladder diagram is converted into text tokens. Additionally, as per the current disclosure, each text token is identified by a position associated with the text token in the sequence of text tokens. By sequentially organizing text tokens and implicitly connecting them based on their order and logic structures and token identifiers are completely avoided. Connection of the text tokens herein refers to logical arrangement of the graphical elements or text tokens which is used the translator (compiler or assembler) to generate the control logic. Accordingly, the resultant text is substantially smaller and retains better human readability. In an example, each text token comprises a null token identifier since an actual token identifier value is not required.

In the example, the normally opened contacts are used. However, the disclosure is applicable to also to other types of logic elements, for instance, normally closed contacts, positive signal edge contacts. To describe them, different text tokens need to be populated. For example, instead of 'CONTACT', 'PCONTACT' will be used to denote the positive signal edge contact.

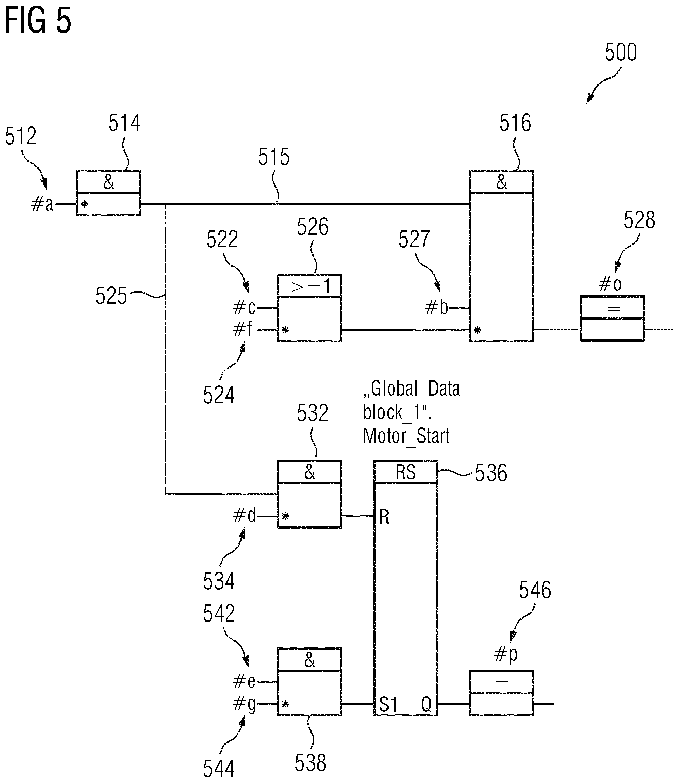

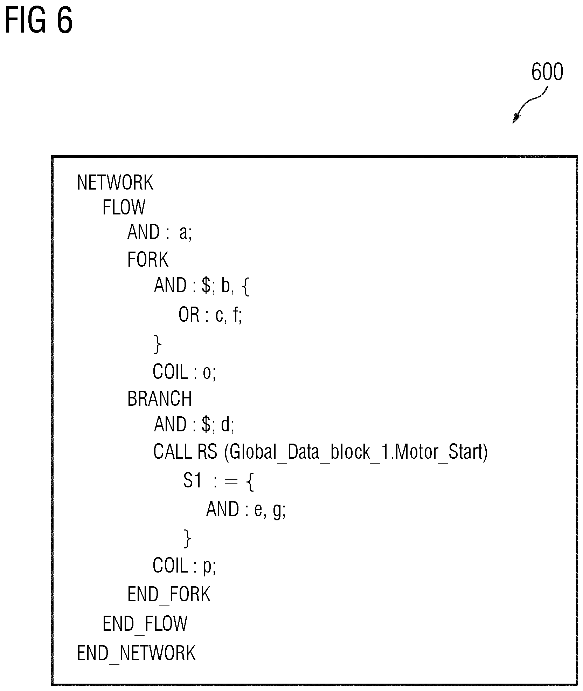

While the above method 200 is explained using ladder diagram 300, the method 200 is also applicable to functional block diagrams. This is further explained using figure 5 and figure 6. In contrast to ladder diagrams, function block diagrams do not have rungs. To represent the data flowing from inputs to outputs through a couple of function blocks, a concept of flow is defined in function block diagrams, which is the counterpart of rung in ladder diagrams.

Figure 5 illustrates a function block diagram 500 containing control logic for motor operation. Implementing the method 200, the engineering tool 110 starts with the detection of the one or more flows in the function block diagram 500. Accordingly, the engineering tool 110 identifies the flow 515, since the function block diagram 500 contains only one flow 515. Then, the engineering tool 110 creates a textual element for the function block diagram 500. The textual element further comprises a text sub-element from the flow 515. In the example, the text sub-element is indicated by a start text tag 'FLOW' and end text tag 'END_FLOW' (as shown in figure 6).

Then, at step 230, the engineering tool 110 populates the text sub-element associated with the corresponding flow 515. Populating text sub-element comprises three sub steps.

At the first sub step, the engineering tool 110 detects one or more branches on the corresponding flow. The flow 515 in the functional block diagram comprises a main branch and one or more secondary branches. For the sake of simplicity, the main branch is numbered with the same number as the corresponding flow. For example, in relation to figure 500, the engineering tool 110 detects a main branch 515 and secondary branch 525.

Then, at second sub step, the engineering tool 110 detects a sequence of graphical elements on each branch from the one or more branches of the flow. For example, in relation to figure 500, the engineering tool 110 detects input variables 512, 522, 524 and 527, function blocks 514, 516, 526, and output variable 528 on the main branch 515 of the flow 515. Similarly, on branch 525, the engineering tool 110 detects input variables 534, 542 and 544, function blocks 532, 536 and 538, and output variable 546.

Then, at third sub step, the engineering tool 110 generates a sequence of text tokens based on the detected sequences of graphical elements and the one or more branches. The sequence of text tokens comprises one fork tokens corresponding to the one or more branches and a plurality of tokens associated with the sequences of graphical elements.

For example, in relation to figure 5 and figure 6, starting with the main branch of the flow 515, the engineering tool 110 generates a text token 'AND' with 'a' for the input variable 512 and the function block 514. Then, since a secondary branch 525 forks from the main branch 515, the engineering tool 110 generates a first fork token and inserts a first start token 'FORK'. Then, engineering tool 110 continues with the sequence of graphical elements on the main branch 515. In contrast to ladder diagrams, where blocks have a main input pin, which should be always connected to the previous logic, blocks in function block diagrams may have multiple input pins with same priority. It may happen that any one of them is connected to its predecessor. Therefore, a '$' sign is used to represent the result of the predecessor and it is placed in the corresponding position of the function block. In the example, 'AND: $, b' means the first input pin of the function block 'AND' is coming from the result of the function block 'AND: a'. The same applies for the line 'AND: $, d'. It is to be noted by a person skilled in the art while the current disclosure is explained using special character '$', any other special character may also be used.

Then, the engineering tool 110 generates a block call element for the function block 516. The block call element comprises a header section comprising the name of the block call element. In the example, the name of the block call element is 'AND'. While the function block 516 comprises three inputs, the block call element comprises the definition of the two inputs. The definition of input from the main branch 515 is not mentioned in the block call element as its value is derived from the previous text tokens in the text sub element. For the definition of the other two inputs, the engineering tool 110 generates text token with 'b' for the input variable 527, a block call element for function block 526. The block call element for the function block 526, comprises the name 'OR' and tokens with 'c' and 'f' for input variables 522 and 524. Then, the engineering tool 110 generates text token 'COIL' with 'o' for the output variable 528.

Then, since a secondary branch 525 forks from the main branch 515, the engineering tool 110 generates a text token indicating the beginning of the branch 525 using text token 'BRANCH'. Then, the engineering tool 110 generates tokens for the graphical elements on the branch 525. Accordingly, the engineering tool 110 generates a block call element for the function block 532. The block call element comprises a header section comprising the name of the block call element. In the example, the name of the block call element is 'AND'. While the logic block 516 comprises two inputs, the block call element comprises the definition of the only one input. The definition of input from the branch 525 is not mentioned in the block call element as its value is derived from the previous text tokens in the text sub element. For the definition of the other input, the engineering tool 110 generates text token with 'd' for the input variable 534. Then, the engineering tool 110 generates a block call element for the function block 536. The block call element comprises a header section comprising the name of the block call element and its parameter. In the example, the name of the block is RS and its parameter is 'Global_Data_block_1.Motor_Start' which is a variable defined in a global data block. While the function block 536 comprises two inputs (R,S1), the block call element comprises the definition of the only one input (S1). The definition of input from the branch 525 is not mentioned in the block call element as its value is derived from the previous text tokens in the text sub element. For the definition of the other input (S1), the engineering tool 110 generates a block call element for the function block 538. The block call element comprises a header section comprising the name of the block call element. In the example, the name of the block call element is 'AND'. The function block 538 comprises two inputs, 'e' and 'g', for the input variables 542 and 544. Then, the engineering tool 110 generates text token 'COIL' with 'p' for the output variable 546.

While the above method is illustrated for converting or persisting graphical control diagrams in text format, the current disclosure can be used for generating graphical representations of text-based control logic as well. The engineering tool 110 may be utilized for generating graphical representations of text-based control logic by scanning the text tokens and generating appropriate graphical elements. Additionally, while tokens such as 'FORK', 'BRANCH', 'CONTACT' as used in the above example, other such token names may be used. For example, 'B' may be used to indicate a branch start instead of 'BRANCH'.

The present disclosure can take a form of a computer program product comprising program modules accessible from computer-usable or computer-readable medium storing program code for use by or in connection with one or more computers, processing units, or instruction execution system. For example, the engineering tool 110 or persistence module 120 may be realized across one or more devices. Additionally, the persistence module may be realized outside the engineering tool 110 as a separate device or a module of the control system 140.

Accordingly, the current disclosure as describes an engineering tool 700. The engineering tool 700 one or more processors 720 and a non-transitory storage medium 730. The non-transitory storage medium 730 contains a plurality of instructions (733, 736 and 739) for persisting a logic diagram in a textual format.

Upon execution of the rung detection instructions 733, the one or more processors 720 detects one or more rungs in the logic diagram. Then, upon execution of the textual element creation instructions 736, the one or more processors create a textual element for the logic diagram. The textual element further comprises one or more text sub-elements, each text sub-element associated with a corresponding rung from the one or more rungs. Upon execution of the textual element population instructions 739, the one or more processors 720 populate each text sub-element associated with a corresponding rung, wherein populating each text sub-element comprises detecting one or more branches on the corresponding rung; detecting a sequence of graphical elements on each branch from the one or more branches; and generating a sequence of text tokens based on the detected sequences of graphical elements and the one or more branches, wherein the sequence of text tokens comprises one or more fork tokens corresponding to the one or more branches and a plurality of tokens associated with the sequences of graphical elements. Each fork token associated with a corresponding branch is indicative of a start of the corresponding branch, wherein one or more tokens associated with the sequence of graphical elements of the corresponding branch are placed after the first fork token of the corresponding branch.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of persisting a logic diagram (300) in a textual format using an engineering tool (110) associated with a control system (140) of an industrial facility (100), the method (200) comprising:
a. detecting (210) one or more rungs (320, 360) in the logic diagram (300), and each rung (320, 360) is indicated as a horizontal line in the logic diagram in a first orientation;
b. creating (220) a textual element for the logic diagram (300), wherein the textual element further comprises one or more text sub-elements, each text sub-element associated with a corresponding rung from the one or more rungs (320, 360); and
c. populating (230) each text sub-element associated with a corresponding rung, wherein populating each text sub-element comprises:
i. detecting one or more branches on the corresponding rung;
ii. detecting a sequence of graphical elements on each branch from the one or more branches; and
iii. generating a sequence of text tokens based on the detected sequences of graphical elements and the one or more branches, wherein the sequence of text tokens comprises one or more fork tokens corresponding to the one or more branches and one or more text tokens associated with the sequences of graphical elements;
wherein each fork token associated with a corresponding branch is indicative of a start of the corresponding branch, wherein one or more tokens associated with the sequence of graphical elements of the corresponding branch are after the first fork token of the corresponding branch.

2. The method (200) as claimed in claim 1, wherein detecting the one or more branches comprises detecting a join associated with a corresponding branch.

3. The method (200) as claimed in claim 1, wherein each text token is identified by a position associated with the text token in the sequence of text tokens.

4. The method (200) as claimed in claim 1, wherein detecting a sequence of graphical elements comprises detecting at least one logic block (350) on the corresponding branch (340), the at least one logic block comprising one or more input pins, wherein a first input pin from the one or more input pins, is connected to the corresponding first branch (340) and wherein a second input pin from the one or more input pins is connected to at least one input from one of a second branch or a second rung (360).

5. The method (200) as claimed in claim 4, wherein generating the sequence of text tokens further comprises generating a block call element token based on the detected at least one logic block (350), the block call element token comprising an input token indicative of the second input pin; wherein the block call element token is placed after the first fork token of the corresponding branch (340).

6. The method (200) as claimed in claim 1, wherein each text token comprises a null token identifier.

7. An engineering tool (110) for generating control logic for a controller (145) in a control system (140), the engineering tool (110) comprising:
a. a user interface for receiving user input, wherein the user interface is configured to generate a logic diagram based on the user input; and
b. a persistence module connected to the user interface, wherein the persistence module is configured to
i. detect one or more rungs (320, 360) connected in the logic diagram (300), wherein each rung (320, 360) is indicated as a horizontal line in the logic diagram in a first orientation; and
ii. create a textual element for the logic diagram (300), wherein the textual element further comprises one or more text sub-elements, each text sub-element associated with a corresponding rung from the one or more rungs (320, 360); and
iii. populate (230) each text sub-element associated with a corresponding rung, wherein populating each text sub-element comprises:
1. detecting one or more branches on the corresponding rung;
2. detecting a sequence of graphical elements on each branch from the one or more branches; and
3. generating a sequence of text tokens based on the detected sequences of graphical elements and the one or more branches, wherein the sequence of text tokens comprises one or more fork tokens corresponding to the one or more branches and one or more text tokens associated with the sequences of graphical elements;
wherein each fork token associated with a corresponding branch is indicative of a start of the corresponding branch, wherein one or more tokens associated with the sequence of graphical elements of the corresponding branch are after the first fork token of the corresponding branch.

8. The engineering tool (110) as claimed in claim 7,
wherein the persistence module (120) is configured to detect a join associated with a corresponding branch.

9. The engineering tool (110) as claimed in claim 7,
wherein the persistence module (120) is configured to
a. detect at least one logic block (350) on a first branch (340), the at least one logic block comprising one or more input pins, wherein a first input pin from the one or more input pins, is connected to the corresponding first branch (340) and wherein a second input pin from the one or more input pins is connected to at least one input from one of a second branch or a second rung (360); and
b. generate a block call element token based on the detected at least one logic block (350) on the first branch (340), the block call element comprising a input token indicative of the second input pin; wherein the block call element is placed after the first fork token of the corresponding first branch (340).

10. A non-transitory storage medium (730) for persisting a logic diagram (300), the non-transitory storage medium (730) comprising a plurality of instructions, wherein execution of the plurality of instructions by one or more processors (720), causes the one or more processors to:
c. detect one or more rungs (320, 360) in the logic diagram (300), wherein each rung (320, 360) is indicated as a horizontal line in the logic diagram (300) in a first orientation;
d. create a textual element for the logic diagram (300), wherein the textual element further comprises one or more text sub-elements, each text sub-element associated with a corresponding rung from the one or more rungs (320, 360); and
e. populate each text sub-element associated with a corresponding rung, wherein populating each text sub-element comprises:
i. detecting one or more branches on the corresponding rung;
ii. detecting a sequence of graphical elements on each branch from the one or more branches; and
iii. generating a sequence of text tokens based on the detected sequences of graphical elements and the one or more branches, wherein the sequence of text tokens comprises one or more fork tokens corresponding to the one or more branches and one or more text tokens associated with the sequences of graphical elements;
wherein each fork token associated with a corresponding branch is indicative of a start of the corresponding branch, wherein one or more tokens associated with the sequence of graphical elements of the corresponding branch are placed after the first fork token of the corresponding branch.
